# EUROPÄISCHE PATENTSCHRIFT

(11) **EP 3 051 309 B1**
(45) Veröffentlichungstag und Bekanntmachung des Hinweises auf die Patenterteilung: **19.02.2025**
(21) Anmeldenummer: 16000109.5
(22) Anmeldetag: 19.01.2016
(51) Int. Cl.: G01S 15/931, G01S 13/931, G01S 7/40, G01S 7/52

(54) **VERFAHREN ZUM DETEKTIEREN DER UMGEBUNG EINES FAHRZEUGS, SYSTEM, STEUERGERÄT UND FAHRZEUG**
METHOD FOR DETECTING THE SURROUNDINGS OF A VEHICLE, SYSTEM, CONTROLLER AND VEHICLE
PROCEDE DE DETECTION DE L'ENVIRONNEMENT D'UN VEHICULE AUTOMOBILE, SYSTEME, APPAREIL DE COMMANDE ET VEHICULE AUTOMOBILE

(30) Priorität: 30.01.2015 DE 102015001204
(43) Veröffentlichungstag der Anmeldung: 03.08.2016
(73) Patentinhaber: ZF CV Systems Europe BV, 1170 Brussels (BE)
(72) Erfinder: Alker, Felix, 30974 Wennigsen (DE); von der Beeke, Jan-Christoph, 38114 Braunschweig (DE)
(74) Vertreter: Ohlendorf, Henrike

(56) Entgegenhaltungen:
- WO-A1-2006/114206
- DE-A1- 102012 017 668
- US-A1- 2005 068 197
- US-A1- 2008 186 204

## Beschreibung

Die Erfindung betrifft ein System zum Detektieren der Umgebung eines Fahrzeugs, gemäß dem Oberbegriff des Anspruchs 1. Daneben betrifft die Erfindung auch ein Steuergerät und ein Fahrzeug.

In PKWs und Nutzfahrzeugen gehören Sensoren für die Detektion der Umgebung beim Rangieren, insbesondere beim Rückwärtsfahren, zum Stand der Technik. Vorn und hinten am Fahrzeug sind typischerweise jeweils Gruppen von Sensoren, nämlich zwei, drei oder mehr Sensoren angeordnet, mit denen die Annäherung des Fahrzeugs an Hindernisse detektiert wird. Im Fahrzeug werden die Sensorsignale ausgewertet bzw. zumindest akustisch oder optisch angezeigt. In den meisten Fällen handelt es sich bei den Hindernissen um Gebäudeteile, Fahrzeuge, Personen, Geräte und/oder Ladungsteile.

Typischerweise werden für die Detektion der Hindernisse Ultraschallsensoren verwendet. Diese senden ein Ultraschallsignal, empfangen ein Echo und bestimmen aus der Laufzeit den Abstand zum Hindernis. Bei Unterschreiten eines Grenzwertes ertönt ein Signal für den Fahrer, welches außerdem noch je nach Abstand unterschiedlich ausgebildet sein kann.

Jeder Sensor hat einen eigenen Erkennungsbereich und erfasst nur einen begrenzten Raumausschnitt. Die Erkennungsbereiche verschiedener/benachbarter Sensoren können sich überschneiden.

Die Sensoren sind sinnvollerweise so am Fahrzeug angeordnet, dass Fahrzeug-Bauteile nicht in den Erkennungsbereichen liegen. Es gibt jedoch Fahrzeuge, deren Bauteile zeitweilig in einen oder mehrere Erkennungsbereiche der Sensoren ragen, beispielsweise Vorrichtungen zum Beladen der Fahrzeuge, abnehmbare oder verstellbare Anhängerkupplungen, räumlich verstellbare Signaleinrichtungen usw. Ein Bauteil, welches in einen Erkennungsbereich hineinragt, befindet sich ganz oder nur teilweise im Erkennungsbereich.

Um Irritationen durch andauernde Signale, ausgelöst von in Erkennungsbereiche ragende Bauteile, zu vermeiden, könnten alle Sensoren dauerhaft abgeschaltet werden. Die Sensoren sind dann aber komplett abgeschaltet und bleiben abgeschaltet, auch wenn das betreffende Bauteil nicht mehr in den Erkennungsbereich hineinragt. Die Sensoren müssten nach Erkennen der veränderten Situation manuell wieder zugeschaltet werden.

WO 2006/114206 A1 offenbart ein Verfahren zum Betreiben eines Abstandserkennungssystems eines Zugfahrzeugs, bei dem Signale von wenigstens einem heckseitig am Zugfahrzeug angeordneten abstandssensitiven Sensor ausgewertet werden. Dadurch, dass eine Aktivierung der Sensoren abhängig von einem Knickwinkel zwischen Zugfahrzeug und einem angehängten Lastenträger erfolgt, kann die Sicherheit im Betrieb des Zugfahrzeugs mit angehängtem Auflieger oder Anhänger erhöht werden.

Aufgabe der Erfindung ist die Schaffung eines Systems zur Durchführung eines Verfahrens, mit dem in jeder Situation eine hohe angepasste Erkennungsleistung möglich ist.

Zur Lösung der Aufgabe weist das erfindungsgemäße System die Merkmale des Anspruchs 1 auf. Eine Detektion der Umgebung des Fahrzeugs ist zumindest mit folgenden Schritten durchführbar:
a) die Sensoren der Gruppe werden aktiviert und detektieren ihre Umgebung,
b) sofern ein Fahrzeug-Bauteil in den Erkennungsbereich eines oder mehrerer der Sensoren ragt, werden diese Sensoren automatisch abgeschaltet,
c) die Detektion der Umgebung wird mit den nicht abgeschalteten Sensoren weitergeführt.

In einem Speicher sind Referenz-Muster von Fahrzeug-Bauteilen hinterlegt. Diese Muster werden mit den von den Sensoren ermittelten Daten verglichen. Es werden nur dann Sensoren abgeschaltet, wenn eine Übereinstimmung mit den hinterlegten Mustern festgestellt wird. Dadurch ist sichergestellt, dass bereits dicht am Fahrzeug befindliche Hindernisse nicht als Fahrzeug-Bauteile interpretiert werden. Der Speicher ist vorzugsweise dem Steuergerät zugeordnet oder sogar Teil desselben.

Es können verschiedene Erkennungsbereiche gemeint sein. Zum einen existiert ein größtmöglicher Erkennungsbereich, gegeben durch die Empfindlichkeit des Sensors. Zum anderen kann dieser größtmögliche Erkennungsbereich auf einen reduzierten Erkennungsbereich beschränkt sein durch willkürlich vorgegebene Grenzen. Beispielsweise können Sensorsignale unberücksichtigt bleiben, die auf eine Entfernung von mehr als einen Meter vom Sensor (oder auf einen anderen Mindestabstand) hinweisen. Der reduzierte Erkennungsbereich ist in diesem Beispiel der Raum vor dem Sensor mit einem maximalen Abstand von einem Meter zum Sensor. Schließlich sind noch andere Erkennungsbereiche denkbar, die sich durch Randbedingungen für die Sensoren ergeben. Für die Anwendung der Erfindung in der Praxis kann jedweder Erkennungsbereich relevant sein. Insbesondere wird die Erfindung im Zusammenhang mit einem reduzierten Erkennungsbereich verwendet.

Es wird davon ausgegangen, dass die Sensoren nur zeitweise aktiv sind und die Umgebung detektieren. Zu Beginn der Detektion werden grundsätzlich alle Sensoren aktiviert. Sofern Fahrzeug-Bauteile in den Erkennungsbereich wenigstens eines Sensors ragen, wird dieser Sensor abgeschaltet und die Detektion wird nur noch mit den übrigen Sensoren weitergeführt. Eine komplette Abschaltung wird vermieden. Im Extremfall bleibt nur noch ein Sensor aktiv.

Das Abschalten der Sensoren, die ein Fahrzeug-Bauteil erkennen, erfolgt automatisch durch eine elektronische Steuerung. Eine entsprechende Software startet die Detektion der Umgebung, wertet die Signale aller Sensoren aus und schaltet bei Bedarf einzelne Sensoren ab. Der Eingriff einer Bedienungsperson zum Abschalten oder Zuschalten von Sensoren ist nicht mehr erforderlich.

Die Detektion der Umgebung wird ausgelöst durch manuelle Betätigung oder definierte Ereignisse im Zusammenhang mit dem Fahrzeug, beispielsweise durch das Einlegen eines Rückwärtsganges, den Beginn einer Rückwärtsfahrt, ausgehend vom Stillstand, den Eintritt des Fahrzeugs in einen Geschwindigkeitskorridor von 0 bis 10 km/Stunde, aus dem Stillstand und/oder auch aus einer höheren Geschwindigkeit.

Auslöser für die erfindungsgemäße Detektion der Umgebung kann auch die Ansteuerung oder Betätigung eines beweglichen Fahrzeug-Bauteils sein, etwa einer nur zeitweise im Erkennungsbereich von Sensoren vorgesehenen Ladevorrichtung oder das Ausschwenken einer Anhängerkupplung. Zumindest in diesem Zusammenhang können als Fahrzeug-Bauteile auch Teile gelten, die zeitweilig mit Fahrzeug-Bauteilen verbunden sind. Beispielsweise nimmt ein Müllfahrzeug mit seiner Ladevorrichtung ein Müllgefäß auf, so dass Letzteres zeitweise als Fahrzeug-Bauteil angesehen werden kann.

Nach einem weiteren Gedanken der Erfindung wird in Schritt b) ein reduzierter Erkennungsbereich verwendet, der begrenzt ist auf einen definierten Raum innerhalb des maximal möglichen Erkennungsbereichs. Vorzugsweise werden außerhalb des reduzierten Erkennungsbereichs liegende Hindernisse für das Abschalten vom Sensor nicht berücksichtigt.

Nach einem weiteren Gedanken der Erfindung ist vorgesehen, dass Sensoren verwendet werden, welche akustische und/oder elektromagnetische Signale detektieren, insbesondere
a) Ultraschall-Signale oder
b) Radar-Signale oder
c) Lidar-Signale oder
d) Kombinationen der genannten Signale.

Sensoren im engeren Sinne sind nur Signal-Empfänger. Geeignete Signal-Sender sind dann zusätzlich vorhanden. Als Sensoren können aber auch kombinierte Sender-Empfänger vorgesehen sein.

Die Detektion endet bei Eintritt eines definierten Ereignisses, z. B. bei FahrzeugStillstand, Gangwechsel oder nach manueller Abschaltung. Danach kann ein neuer Zyklus zum Detektieren der Umgebung starten, wiederum in Abhängigkeit vom Eintritt eines definierten Ereignisses.

Bestandteile des Systems sind zumindest eine Gruppe von wenigstens zwei Sensoren und ein elektronisches Steuergerät. Vorzugsweise sind wenigstens drei Sensoren vorgesehen, von denen nach Bedarf ein Sensor abgeschaltet wird.

Gegenstand der Erfindung ist auch ein elektronisches Steuergerät für ein erfindungsgemäßes System. Das Steuergerät ist mit einer Software zur Durchführung des Verfahrens ausgestattet und weist Schnittstellen für die Verbindung mit Sensoren bzw. Sendern und/oder Empfängern auf. Vorzugsweise handelt es sich um ein Steuergerät, welches zugleich Teil eines elektronischen Bremssystems für ein Fahrzeug ist.

Das Steuergerät ist vorzugsweise auch mit einer Ausgabeeinheit verbunden. Bei der Ausgabeeinheit handelt es sich insbesondere um eine Einheit zur Abgabe akustischer Signale, eine Einheit zur Anzeige optischer Signale, eine Einheit zur Abgabe auf andere Weise spürbarer Signale (zum Beispiel Vibrationen) und/oder um einen Bildschirm zur Darstellung von Konturen des detektierten Hindernisses oder anderer Informationen.

Gegenstand der Erfindung ist auch ein Fahrzeug mit einem erfindungsgemäßen System. Vorteilhafterweise sind Sensoren an einer Rückseite des Fahrzeugs vorgesehen, insbesondere mittig, rechts außen und links außen. Sensoren können auch seitlich, an einer Vorderseite des Fahrzeugs und/oder an anderer Stelle positioniert sein.

Die Erfindung ist vorzugsweise vorgesehen für Fahrzeuge mit elektronischem Bremssystem und automatischem Bremseingriff. Das Steuergerät kann zugleich Bremsensteuergerät sein, als weiteres Steuergerät in das Bremssystem integriert sein oder mit dem Bremssystem in Verbindung stehen.

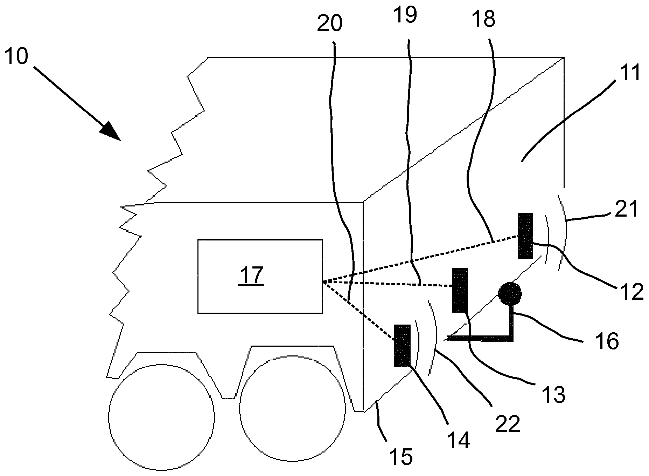

Weitere Merkmale der Erfindung ergeben sich aus der Beschreibung im Übrigen und aus den Ansprüchen. Vorteilhafte Ausführungsbeispiele der Erfindung werden nachfolgend anhand der einzigen Figur beschrieben.

Gezeigt ist ein rückwärtiger Teil eines Fahrzeugs 10, insbesondere eines Nutzfahrzeugs. Im Bereich einer Fahrzeug-Rückseite 11 ist eine Gruppe von drei UltraschallSensoren 12, 13, 14 angeordnet, nahe einer Unterkante 15 der Rückseite 11.

Der Sensor 12 ist an der Rückseite 11 rechts außen angeordnet, der Sensor 14 links außen, während der Sensor 13 etwa mittig vorgesehen ist. Die Sensoren 12 bis 14 sind als Sender-Empfänger ausgebildet.

Das Fahrzeug 10 weist an seiner Rückseite 11 eine abnehmbare oder ausfahrbare Anhängerkupplung 16 auf. Die ausgefahrene oder montierte Anhängerkupplung 16 liegt im Erkennungsbereich des mittleren Sensors 13.

Das Fahrzeug 10 weist ein elektronisches Steuergerät 17 auf, welches über Leitungen 18, 19, 20 mit den Sensoren 12 bis 14 verbunden ist und diese steuert bzw. deren Signale empfängt. Das Steuergerät 17 kann Teil eines elektronischen Bremssystems des Fahrzeugs 10 und/oder mit weiteren Steuergeräten des Fahrzeugs verbunden sein.

Die Sensoren 12 bis 14 detektieren die Umgebung im Bereich der Rückseite 11 in Abhängigkeit von definierten Situationen oder Zuständen des Fahrzeugs 10. Im vorliegenden Fall weist das Fahrzeug einen Motor mit Getriebe auf. Bei Einlegen eines Rückwärtsganges startet die Detektion der Umgebung unter Verwendung der Sensoren 12 bis 14. Zunächst werden alle Sensoren aktiviert und detektieren ihre Umgebung. Dabei erfasst der mittlere Sensor 13 die Anhängerkupplung 16 in seinem Erkennungsbereich. Daraufhin wird der mittlere Sensor 13 abgeschaltet und die Detektion der Umgebung wird mit den nicht abgeschalteten Sensoren 12 und 14 weitergeführt, siehe Signale 21, 22.

Die Detektion der Umgebung wird solange ausgeführt, bis ein definiertes Ereignis die Detektion beendet, z. B. die Herausnahme des Rückwärtsganges und/oder die Überschreitung oder Unterschreitung einer definierten Geschwindigkeit und/oder andere Ereignisse.

## Patentansprüche

1. System zum Einbau in ein Fahrzeug (10) und zum Detektieren der Umgebung des Fahrzeugs (10), mit zumindest einer Gruppe von wenigstens zwei Sensoren (12, 13, 14) und einem Steuergerät (17), wobei die Detektion der Umgebung zumindest mit folgenden Schritten durchführbar ist:
a) die Sensoren (12, 13, 14) werden aktiviert und detektieren ihre Umgebung,
b) sofern ein Fahrzeug-Bauteil in einen Erkennungsbereich eines oder mehrerer der Sensoren (12 - 14) ragt, werden diese Sensoren abgeschaltet,
c) die Detektion der Umgebung wird mit den nicht abgeschalteten Sensoren (12, 14) weitergeführt, **dadurch gekennzeichnet, dass** in einem Speicher Referenz-Muster von Fahrzeug-Bauteilen hinterlegt sind, dass diese Muster mit den von den Sensoren (12 - 14) ermittelten Daten verglichen werden, und dass nur dann Sensoren (13) abgeschaltet werden, wenn Übereinstimmung festgestellt wird.

2. Steuergerät für ein System nach Anspruch 1.

3. Fahrzeug mit einem System nach Anspruch 1.

4. Fahrzeug nach Anspruch 3, **dadurch gekennzeichnet, dass** die Sensoren (12 - 14) an einer Fahrzeug-Rückseite (11) vorgesehen sind, insbesondere mittig, rechts außen und links außen.

## Claims

1. System for installation in a vehicle (10) and for detecting the surroundings of the vehicle (10), the system comprising at least one group of at least two sensors (12, 13, 14) and a control unit (17), wherein the surroundings can be detected at least by means of the following steps:
a) the sensors (12, 13, 14) are activated and detect their surroundings,
b) if a vehicle component protrudes into a detection range of one or more of the sensors (12-14), these sensors are switched off,
c) detection of the surroundings is continued by means of the sensors (12, 14) which are not switched off, **characterized in that** reference patterns of vehicle components are stored in a memory, **in that** these patterns are compared with the data determined by the sensors (12-14), and **in that** sensors (13) are only switched off if a match is identified.

2. Control unit for a system according to claim 1.

3. Vehicle comprising a system according to claim 1.

4. Vehicle according to claim 3, **characterized in that** the sensors (12-14) are provided on a rear side (11) of the vehicle, in particular in the middle, on the outside right and on the outside left.

## Revendications

1. Système destiné à être monté dans un véhicule (10) et à détecter l'environnement du véhicule (10), comportant au moins un groupe d'au moins deux capteurs (12, 13, 14) et un appareil de commande (17), dans lequel la détection de l'environnement peut être réalisée au moins par les étapes suivantes :
a) les capteurs (12, 13, 14) sont activés et détectent leur environnement,
b) dès qu'un composant de véhicule pénètre dans une zone de détection d'un ou de plusieurs des capteurs (12-14), lesdits capteurs sont désactivés,
c) la détection de l'environnement est poursuivie avec les capteurs (12, 14) non désactivés, **caractérisé en ce que** des modèles de référence de composants de véhicule sont enregistrés dans une mémoire, **en ce que** lesdits modèles sont comparés aux données déterminées par les capteurs (12 - 14), **et en ce que** des capteurs (13) sont désactivés uniquement lorsqu'une concordance est constatée.

2. Appareil de commande pour un système selon la revendication 1.

3. Véhicule comportant un système selon la revendication 1.

4. Véhicule selon la revendication 3, **caractérisé en ce que** les capteurs (12 - 14) sont prévus sur une face arrière de véhicule (11), en particulier au centre, à l'extérieur droit et à l'extérieur gauche.
